# EUROPEAN PATENT APPLICATION

(11) **EP 4 418 506 A2**
(43) Date of publication of application: **21.08.2024**
(21) Application number: 24178247.3
(22) Date of filing: 18.07.2022
(51) Int. Cl.: H02K 5/20

(54) **AXIAL FLUX MACHINE WITH DIRECT MAGNET COOLING**

(62) Divisional of application: 22185393.0
(71) Applicant: MAGNAX BV, 8500 Kortrijk (BE)
(72) Inventor: Levrouw, Jasper, 8500 Kortrijk (BE); Leijnen, Peter, 8500 Kortrijk (BE); Rennuy, Mathieu, 8500 Kortrijk (BE); David, Louis, 8500 Kortrijk (BE); Zhang, Jie, 8500 Kortrijk (BE)
(74) Representative: IP HILLS NV

(57) **Abstract**

Axial flux machine, comprising a stator (100) and a rotor, wherein:
- the stator (100) comprises a plurality of stator elements (204) enclosed by a stator housing, the stator housing comprising a first cover (103);
- the first rotor disk (101) comprises magnets (107) located in an annular zone (500);
- the stator (100) comprises:
∘ one or more spraying elements (800) provided on the first cover (103), each of the spraying elements (800) comprising at least one exit hole, and
∘ one or more cooling channels (900) adapted to guide a cooling fluid under pressure to the one or more respective spraying elements (800);

- any of the spraying elements (800) is adapted to eject cooling fluid towards the annular magnet zone (500), such that during operation with rotating rotor, the magnets (107) are cooled by cooling fluid sprayed directly on the respective magnet surfaces.

## Description

### Field of the Invention

The present invention generally relates to the field of axial flux machines. In particular, a solution for improved rotor cooling is presented, that allows for an easy integration into an axial flux machine, and results in a rotor magnet cooling with increased cooling efficiency.

### Background of the Invention

An axial flux machine is a type of electrical machine wherein a flux is generated in axial direction, the latter being the direction of the rotational axis. Typically, an axial flux machine comprises a disk- or ring-shaped rotor and stator, both having a central axis corresponding to the rotational axis of the machine, the stator and rotor being axially spaced apart by a narrow air gap. The rotor comprises magnetic material, typically permanent magnets, generating an axial magnetic flux. The stator comprises a plurality of coils in which currents may run. During motor operation, the rotor is driven by magnetic fields generated by the stator currents, while in generator condition currents are induced in the stator coils due to the rotation of the rotor. Different topologies are known for axial flux machines, for example comprising one rotor and stator, one rotor and two stators, or two rotor disks positioned on both sides of a stator.

During operation of the axial flux machine, the rotor magnets and rotor structure heat up due to eddy current losses in the magnetic material and back iron structure. These high temperatures have a negative impact on the mechanical and magnetic performance and reliability of the magnetic materials, thereby adversely affecting the performance of the machine. Moreover, magnetic material of a higher temperature grade is more expensive, and substantially contribute to the overall cost of the machine. As the losses are proportional to the rotational speed, the high temperatures reached by the magnetic material in the rotor currently constitute a limitation on the motor speed.

Whilst cooling the stator also cools the rotor to some extent, there still may remain a significant amount of heat in the rotors. Solutions have therefore been proposed in the prior art, focussing specifically on cooling of the rotor magnets.

In US10630157B2 and WO2016185173A1 an axial flux machine rotor is cooled via air cooling, provided by impellor blades. As the impellor blades are located at the rotor side facing away from the stator, no direct cooling of the magnets - the latter facing the air gap - is possible. Therefore, heat generated in the rotor magnets first needs to be transferred through the back iron material and the rotor casing, thereby negatively affecting the cooling efficiency.

The solution presented in WO2015/019107A2 is directed to provide an improved cooling of the rotor magnets. The axial flux machine comprises a sump in which a cooling fluid is provided. When the rotor rotates, the magnets are successively submerged in the sump with cooling fluid. Rotation of the rotor through the fluid further causes the fluid to be picked up by the disk which tends to centrifuge it outwardly. As cooling fluid contacts the rotor structure, an improved cooling thereof is obtained. However, as the sump with cooling fluid may cause additional friction during rotation of the rotor, the level in the sump needs to be limited. Magnets thus may only partly be submerged, thereby still limiting the obtained cooling efficiency.

It is an objective of the present invention to disclose an axial flux machine, that resolves one or more of the above-described shortcomings of the prior art solutions. More particularly, it is an objective to present a solution for improved rotor cooling, that allows for an easy integration into an axial flux machine, and results in a rotor magnet cooling with increased cooling efficiency.

### Summary of the Invention

According to a first aspect of the present invention, the above identified objectives are realized by an axial flux machine defined by claim 1, the axial flux machine comprising a stator and a rotor having a central axis in axial direction corresponding to the rotational axis of the axial flux machine, and the rotor comprising a first rotor disk being axially separated from the stator by an air gap, wherein:
- the stator comprises a plurality of stator elements enclosed by a stator housing, any of the stator elements comprising a coil wound around a core;
- the first rotor disk comprises magnets, of which the magnet surfaces are located in an annular zone on the rotor disk side facing the air gap,

and wherein the stator comprises:
   - one or more spraying elements, each of the spraying elements comprising at least one exit hole, and
   - one or more cooling channels adapted to guide a cooling fluid under pressure to the one or more respective spraying elements, any of the one or more cooling channels comprising a radial portion adapted to guide cooling fluid from the outer towards the inner circumference of the stator, and an end portion ending in the spraying element, the end portion being in fluid communication with the radial portion,
and wherein:
   - the stator housing comprises a first cover, the first cover having an internal side facing the upper side of the coils and an external side facing the air gap, wherein the one or more spraying elements are provided on the first cover;
   - the end portion is provided as a channel through the material of the first cover, and
   - the radial portion
      ∘ is provided as a channel running through the material of the first cover, or running through the material of a wall, the wall positioned between adjacent stator elements, or
      ∘ is a fluid passage defined by space available between the internal side of the first cover and the upper side of a coil, or between the internal side of the first cover and a plate, the plate positioned between the internal side of the first cover and the upper side of a coil, such that during operation, while the cooling fluid is flowing from the outer towards the inner circumference of the stator, the cooling fluid is guided between the internal side of the first cover and respectively the upper side of the coil or the plate, and wherein the end portion branches off from the fluid passage,
wherein any of the spraying elements is adapted to eject cooling fluid towards the annular magnet zone, such that during operation with rotating rotor, the magnets are cooled by cooling fluid sprayed directly on the respective magnet surfaces.

Thus, the invention concerns an axial flux machine, which may equally be referred to as, for example, an axial air-gap electric motor or generator, or an axial flux permanent magnet machine. An axial flux machine is a type of electrical machine wherein a flux is generated in axial direction, the latter being the direction of the rotational axis. Typically, the machine is suited to operate as a motor and as a generator, depending on the working condition. The axial flux machine has at least one stator and at least one rotor. During operation, the stator remains stationary, while the rotor is an assembly of components that are rotating during operation of the machine. Typically, the stator and rotor each comprise a disk- or ring-shaped component, referred to as a stator disk respectively rotor disk. The stator disk and rotor disk are axially spaced apart by a narrow air gap. Different topologies are possible. For example, the machine may comprise one rotor disk and one stator disk, one rotor disk and two stator disks, or two rotor disks and one stator disk. In the latter case, the two rotor disks are mounted on both sides of the stator disk, and a first respectively second air gap is present between the stator and the first respectively second rotor disk. The axial flux machine may be of the torus type, having a stator yoke, or may be of the YASA type, not having a stator yoke. The latter machine is also referred to as, for example, a yokeless and segmented armature (YASA) motor or generator, or simply a yokeless axial flux machine.

The stator comprises a plurality of stator elements, of which the arrangement is typically rotationally symmetrical with respect to the central axis. Every stator element comprises a coil wound around a core. The one or more rotor disks are mounted on the shaft of the machine. Every rotor disk comprises magnetic material, typically permanent magnets, generating an axial magnetic flux. During motor operation, the rotor is driven by magnetic fields generated by stator currents running in the coils, while in generator condition currents are induced in the stator coils due to the rotation of the rotor.

The stator elements are enclosed by a stator housing, which may also be referred to as the clamshell. Typically, the stator housing comprises two parallel cover plates, wherein the first and second cover plate are connected by circumferential walls extending in axial direction, one circumferential wall positioned at the outer circumference and one circumferential wall positioned at the inner circumference. The cover located at the side of the first air gap, is referred to as the first cover. The cover at the opposing side is referred to as the second cover. The first cover has an internal side and an external side. The internal side is directed towards the interior of the stator housing and thus faces the coils. The external side is directed towards the exterior of the stator housing and thus faces the first air gap. The cover plates may have holes, through which the cores extend. In this case, the top and bottom surfaces of the cores are in contact with the respective air gap. In another embodiment, the cover plates do not comprise such holes but have a contiguous surface. In that case, the cores do not extend through the cover plates but are located entirely between the two opposing cover plates. Apart from the cover plates and circumferential walls, the stator housing may as well comprise an internal structure. For example, the stator housing may comprise walls positioned between adjacent stator elements, e.g. for guiding a stator cooling fluid. Typically, such walls extend in radial direction and in axial direction. The walls may connect the two opposing cover plates. In another embodiment, no such walls are present.

The rotor disk comprises magnetic material, which may also be referred to as magnets or rotor magnets, and typically being provided as permanent magnets. Typically, every magnet is connected to a rotor cover plate, wherein a back iron structure is located between the cover plate and the magnet. In this way, the top surface of the magnets is facing the air gap, while the back surface of the magnets is connected to the back iron structure. The top surfaces of the magnets are thus in contact with the air gap. The magnets typically have an arrangement which is rotationally symmetrical with respect to the central axis. The top surfaces of the magnets are located in an annular zone on the rotor disk side facing the air gap. This means that an annular or ring-shaped zone is present on the rotor disk, defined by the position of the magnets; any of the magnets is located in this annular or ring-shaped zone.

The stator comprises one or more spraying elements, provided on the first cover. A spraying element is an element adapted to eject cooling fluid. A fluid is a liquid, e.g. water or oil, or a gas, e.g. air. Every spraying element comprises at least one exit hole, through which fluid can leave the spraying element. The cooling fluid is under pressure, such that, under the action of pressure, a jet or spray may leave the spraying element. In an embodiment, the spraying element may be adapted to create a jet in a well-defined direction, i.e. being adapted to eject the fluid in a coherent stream. For example, the spraying element is a single hole, through which a fluid under pressure is ejected, or the spraying element is a jet nozzle. In another embodiment, the spraying element may be adapted to generate a dispersed spray of fluid. For example, the spraying element is a nozzle adapted to produce a fine spray of liquids.

The stator further comprises one or more cooling channels, adapted to guide a cooling fluid under pressure to the one or more respective spraying elements. If the first stator cover comprises a single spraying element, a single cooling channel is present to guide the cooling fluid from an inlet towards the spraying element. If the first stator cover comprises multiple spraying elements, multiple cooling channels are provided, each of them guiding the cooling fluid from an inlet towards a respective spraying element. Different embodiments are possible for the cooling channels. A cooling channel may be a channel running through stator housing material, e.g. a bored channel being fully surrounded by stator housing material, or it may be a fluid passage inside the stator housing, e.g. defined by the cover plate and/or one or more stator elements. Also a combination of a fluid passage and bored channel is possible, to compose the aforementioned cooling channel.

During operation, a cooling fluid under pressure flows through the one or more cooling channels. The machine thus comprises a cooling fluid supply, adapted to supply or deliver such a fluid under pressure. In an embodiment, the cooling fluid that flows through the one or more cooling channels may be tapped from a stator cooling circuit. In this case, the stator housing comprises an inlet to provide a cooling fluid towards the interior of the stator housing, and this cooling fluid is partly used for cooling the stator, and partly sent through the cooling channels, for cooling of the magnets of the rotor. The one or more cooling channels thus branch off from the stator cooling circuit. In another embodiment, a separate circuit is available for rotor and stator cooling.

Any of the spraying elements is adapted to eject cooling fluid towards the annular magnet zone of the first rotor disk. This means that the one or more spraying elements are arranged in such a way that the generated jet or spray at least partly is directed towards the rotor zone in which the magnets are located. Thus, after being ejected, the cooling fluid crosses the air gap, and at least part of the ejected fluid reaches the ring-shaped rotor zone in which the magnets are located. In a stationary position of the first rotor disk, cooling fluid may be splashed onto one or more magnet surfaces, and/or splashed onto material located between adjacent magnets. During operation of the machine, when the rotor disk rotates, every magnet successively passes the cooling fluid jet or spray, thereby being splashed by the ejected cooling fluid. In this way, during operation with rotating rotor, the magnets are cooled by cooling fluid sprayed directly on the respective magnet surfaces. Typically, because of the high rotation speed of the rotor, a single spraying element on the first stator cover, or a low number of spraying elements on the first stator cover, may suffice to obtain continuous cooling of the rotor magnets.

The invented cooling solution thus makes use of one or more cooling channels running though the stator, and corresponding spraying elements, thereby allowing to eject cooling fluid into the air gap, towards the magnet top surfaces. This goes along with multiple advantages.

Firstly, the invented rotor cooling allows for an easy implementation and integration into an axial flux machine. Indeed, the invention only requires to provide one or more cooling channels and corresponding spraying elements, all of which are located in the stator; no adaptations to the rotor are needed. As the stator remains stationary during operation of the machine, a cooling fluid can be easily supplied to it. The complexity of supplying a cooling fluid towards a rotating portion of the machine, as e.g. would be the case if cooling channels were to be provided in the rotor disk, is therefore avoided.

Secondly, the invented cooling solution allows the rotor magnets to be cooled in a direct way. Indeed, the ejected cooling fluid directly contacts the magnet surfaces, thereby allowing for an efficient heat transfer from the magnets to the cooling fluid. Cooling is thus optimally focussed onto those elements to be cooled, thereby allowing for a high cooling efficiency.

Finally, the jet or spray may be generated in such a way as to provide merely the amount of cooling fluid required for the magnet cooling. As a result, no excess of cooling fluid is ejected into the air gap, thereby avoiding that the air gap would get soaked with cooling fluid. The latter is important to prevent that too much friction would be created in the air gap, thereby impacting the overall performance of the machine.

As the invention allows for an improved magnet cooling, this results in a better performance of the axial flux machine, an increased level of maximum rotational speed, and a lower cost,

Indeed, the better the magnetic material of the magnets can be cooled, the lower its operating temperature. This results in a higher efficiency and increased torque. On the other hand, as the eddy current losses are proportional to the rotational speed, higher speeds may be allowed if a better magnet cooling is provided. Higher speed motor designs thus become possible.

Finally, when the temperature reached in the magnetic material is lowered, a lower magnet temperature class may be used, thereby decreasing the magnet material cost as fewer to no rare earth metals are to be used. Moreover, the manufacturing cost reduces when a better magnet cooling is obtained, because segmentations may be larger and a less amount of segmentations needs to be applied. Since the magnets are among the most expensive components of the axial flux machine, reducing their cost substantially reduces the overall cost of the machine.

Optionally, the one or more spraying elements are provided as one or more respective holes in the first cover plate, thereby being adapted to eject the cooling fluid as a jet pointing at the magnet zone. In an embodiment, one hole may be provided in the first cover plate, the hole serving as a single spraying element. In another embodiment, multiple holes may be provided in the first cover plate, each of these holes serving as a spraying element. Under the action of pressure, cooling fluid is ejected from the hole, in the form of a jet. The jet represents a coherent stream of fluid, in a well-defined direction. When being ejected, the jet points towards the rotor zone in which the magnets are located. Providing the spraying elements as holes has the advantage that still a regular pressure level may be used with respect to the cooling fluid; no increased fluid pressure is needed as would be the case if nozzles would be used as spraying elements.

Optionally, the one or more cooling channels branch off from a cooling circuit for cooling the stator elements. This implies that the axial flux machine comprises a stator cooling circuit, in which a cooling fluid is circulated for cooling the stator elements. For example, a cooling fluid may be supplied via an inlet port to a circumferential channel, after which it flows in radial direction between adjacent coils. The one or more cooling channels, for cooling the rotor magnets, branch off from the stator cooling circuit. This means that cooling fluid provided to the stator via the inlet port, is partly used for cooling the stator, by circulation between the stator elements, and partly used for cooling the rotor, via the cooling channels and spray elements. In other words, the cooling fluid for magnet cooling is tapped from the main cooling circuit, the latter already being present for stator cooling. Both the stator cooling and rotor magnet cooling thus use a common cooling fluid supply; no separate cooling circuits are used for rotor and stator cooling. This contributes to a reduced complexity and cost of the axial flux machine.

Optionally, the cooling fluid is a cooling liquid, for example oil.

Optionally, the first cover has an outer circumference and an inner circumference, and any of the one or more spraying elements is located at a radial position closer to the inner circumference than to the outer circumference. Typically, the first cover plate is ring shaped, with a circular outer circumference and circular inner circumference. Each of the spraying elements is positioned close to the inner circumference of the first stator cover. In this way, the cooling fluid is sprayed onto the annular magnet zone at a radial position closer to the inner limit of the zone than to the outer limit of the zone. This has the advantage that, due to the centrifugal force, cooling fluid will further be scattered, thereby contributing to a higher cooling efficiency.

Optionally, any of the one or more cooling channels is in fluid communication with a fluid inlet located at the outer circumference of the stator, such that, during operation, cooling fluid is guided from the outer towards the inner circumference of the stator, before being ejected via the one or more spraying elements. The stator housing comprises an inlet, for providing cold cooling fluid towards the stator. Typically, for allowing a simple machine design, the inlet is located at the outer circumference of the stator disk. The one or more cooling channels, for rotor cooling, are in fluid communication with the fluid inlet at the outer circumference. This means that the one or more cooling channels, during operation of the machine, receive fluid from the inlet, by being connected, either directly or via an intermediate element, to the inlet. As a result, when the fluid inlet is located at the outer circumference of the stator, and the spraying element is located close to the inner circumference, the cooling fluid first needs to be transferred from the outer towards the inner circumference, before being ejected via the spraying element. The fluid is thus transferred via the cooling channel, in the direction of the inner circumference, the cooling channel not necessarily reaching the inner circumference itself. Typically, the transfer from the outer to the inner circumference is a fluid transport in radial direction or a direction being substantially radial.

According to claim 1, any of the one or more cooling channels comprises a radial portion adapted to guide cooling fluid from the outer towards the inner circumference of the stator, and an end portion, wherein the end portion is provided as a channel through the material of the first cover and ends in the spraying element, the end portion being in fluid communication with the radial portion. This means that a cooling channel comprises a radial portion, followed by an end portion, the latter ending at the spraying element in the first stator cover. The radial portion of the cooling channel is adapted to transfer fluid from the outer towards the inner circumference of the stator. Typically, this is a transport in radial direction, or substantially radial, but in embodiments this transport may deviate from the radial direction. The term 'radial' in 'radial portion' thus merely serves to indicate the portion of the channel being adapted for the transport from outer towards inner circumference. The radial portion of the cooling channel may be implemented differently, according to various embodiments. For example, the radial portion may be provided as a channel bored in stator housing material or may be provided as a fluid passage in the interior of the stator housing. The end portion is provided as a channel through the material of the first cover and ends in the spraying element. This means that the end portion is a channel delimited by a surrounding surface, e.g. a cylindrical surface, the surface being made of stator housing material. The end portion thus is a channel, hole, groove, recess, bore hole or duct applied in the material of the cover plate, thus being fully surrounded by stator housing material. The end portion is in fluid communication with the radial portion. This means that, during operation of the machine, the end portion receives fluid from the radial portion. In an embodiment, the end portion directly connects the radial portion to a spraying element. In another embodiment, the radial portion is connected to a spraying element indirectly, i.e. over an intermediate element.

According to an embodiment, the radial portion is provided as a channel running through the material of the first cover, or running through the material of a wall, the wall positioned between adjacent stator elements. The wall makes part of the internal structure of the stator housing, and is thus comprised in the stator housing. In an embodiment, the stator housing may comprise multiple walls, each wall being positioned between adjacent stator elements. Typically, such walls run in radial direction, e.g. for guiding a stator cooling fluid between the coils. In an embodiment, the wall is connected to the first cover plate. The radial portion is provided as a channel running through the material of the first cover, or running through the material of the wall. This means that the radial portion is a channel delimited by a surrounding surface, e.g. a cylindrical surface, the surface being made of stator housing material. The radial portion thus is a channel, hole, groove, recess, bore hole or duct applied in the material of the cover plate or the wall, thus being fully surrounded by stator housing material. Accordingly, both the end portion and the radial portion of the cooling channel are provided as a channel running through stator housing material. In an embodiment, the end portion is directly connected to the radial portion. Providing the radial portion of the cooling channel as a channel running through stator housing material has the advantage that the transfer of cooling fluid from outer to inner circumference happens without heating of the cooling fluid. Indeed, the transport of the cooling fluid for rotor cooling happens in a channel being separate from the stator elements, thereby avoiding any contact with the hot stator elements, and thus avoiding heating of the fluid for rotor cooling.

According to an embodiment, the radial portion is a fluid passage defined by the internal side of the first cover and the upper side of a coil, and the end portion branches off from this fluid passage. During operation of the axial flux machine, the cooling fluid is guided between the upper side of the coil and the internal side of the first cover when flowing from the outer towards the inner circumference of the stator. Thus, the radial portion is not provided as a channel through stator housing material, but as a bypass running above and/or underneath a coil. Such a fluid passage or bypass channel is defined by the available space between the inner side of the cover plate and the upper side of the coil, but is not completely enclosed by a material surface. For example, a recess or groove may be applied at the inner side of the cover plate, thereby creating some space between the upper side of the coil and the cover plate, through which cooling fluid may flow. Typically, cooling fluid for cooling the stator elements flows in radial direction, between adjacent stator elements. By providing the bypass between the cover plate and coil, part of the stator cooling fluid will flow through the bypass. As the end portion of the cooling channel for rotor cooling branches off from this bypass channel, some cooling fluid flowing through the bypass will enter the end portion and will be ejected via the spraying element, for cooling the rotor magnets. Thus, the rotor cooling fluid is guided, typically in radial direction, between the upper side of the coil and the internal side of the first cover before being ejected via the spraying element. This has the advantage that no separate channel needs to be provided through stator housing material for the transport in radial direction. On the other hand, some heating of the rotor cooling fluid may occur, due to the contact of the fluid with a hot winding. However, as the contact surface between bypass fluid and the upper side of the coil is limited, heating of the rotor cooling fluid during the transport from outer to inner circumference will be limited as well.

According to an embodiment, the radial portion is a fluid passage defined by the internal side of the first cover and a plate, and the end portion branches off from this fluid passage. The plate is positioned between the internal side of the first cover and the upper side of a coil. During operation of the axial flux machine, the cooling fluid is guided between the plate and the internal side of the first cover when flowing from the outer towards the inner circumference of the stator. Thus, the radial portion is not provided as a channel through stator housing material, but as a bypass running between the plate and the internal side of the cover. Such a fluid passage or bypass channel is defined by the available space between the inner side of the cover plate and the upper side of the plate, but is not completely enclosed by a material surface. For example, a recess or groove may be applied at the inner side of the cover plate, thereby creating some space between the plate and the cover, through which cooling fluid may flow. Typically, cooling fluid for cooling the stator elements flows in radial direction, between adjacent stator elements. By providing the bypass between the cover and the plate, part of the stator cooling fluid will flow through the bypass. As the end portion of the cooling channel for rotor cooling branches off from this bypass channel, some cooling fluid flowing through the bypass will enter the end portion and will be ejected via the spraying element, for cooling the rotor magnets. Thus, the rotor cooling fluid is guided, typically in radial direction, between the plate and the internal side of the first cover before being ejected via the spraying element. This has the advantage that no separate channel needs to be provided through stator housing material for the transport in radial direction. Moreover, the rotor cooling fluid is guided in radial direction without contacting the stator elements. The plate thus shields the cooling fluid from the hot winding, thereby limiting heating of the rotor cooling fluid before being ejected via the spraying element.

Optionally, the radial portion is one of the fluid passages between adjacent stator elements for cooling of the stator elements, such that during operation, the cooling fluid is guided between two adjacent stator elements when flowing from the outer towards the inner circumference of the stator, and the end portion branches off from this fluid passage. This means that the stator cooling circuit comprises fluid passages running between adjacent stator elements. Typically, stator cooling fluid flows in radial direction and cooling of a stator element happens through contact between the cooling fluid and the heated coil. In an embodiment, a radial wall may be present between two adjacent stator elements, such that a fluid passage is defined by the space between a stator element and the radial wall. In another embodiment, no such radial walls are present, and a fluid passage is defined by the space between two adjacent stator elements. The fluid passage may further be defined by the internal side of the two opposing cover plates.

As the end portion of the cooling channel for rotor cooling branches off from the stator fluid passage, some cooling fluid flowing through the passage will enter the end portion and will be ejected via the spraying element, for cooling the rotor magnets. Thus, the rotor cooling fluid is guided, typically in radial direction, between two adjacent stator elements, or between a stator element and a radial wall, before being ejected via the spraying element. This has the advantage that no separate channel needs to be provided through stator housing material for the transport in radial direction. On the other hand, the cooling fluid is heated by contact with at least one of the stator elements, before being used for cooling of the rotor magnets.

Optionally, the cores of the stator elements extend through the first cover, such that surfaces of the respective cores are in contact with the air gap, and, during operation of the machine, at least part of the cooling fluid ejected by the one or more spraying elements splashes against the core surfaces, thereby cooling the cores. This means that the cover plates of the stator housing comprise holes, through which the cores extend. As a result, the top and bottom surfaces of the cores are in contact with the respective air gap. When cooling fluid is ejected via the one or more spraying elements, and reaches the rotor magnets, at least part of it is splashed back onto the core surfaces. In this way, also the cores will be cooled due to the ejected cooling fluid. This has the advantage that, besides an improved rotor magnet cooling, also an improved cooling of the stator elements is obtained.

Optionally,
- the rotor comprises a second rotor disk being axially separated from the stator by a second air gap;
- the stator housing comprises a second cover facing the second air gap; and
- the second rotor disk comprises magnets, of which the magnet surfaces are located in an annular zone on the disk side facing the second air gap,
and the stator comprises:
- a second set of one or more spraying elements provided on the second cover, each of the spraying elements comprising at least one exit hole, and
- a second set of one or more cooling channels adapted to guide a cooling fluid under pressure to the one or more respective spraying elements of the second set,
wherein any of the spraying elements is adapted to eject cooling fluid towards the annular magnet zone of the second rotor disk, such that during operation with rotating rotor, the magnets of the second rotor disk are cooled by cooling fluid sprayed directly on the respective magnet surfaces.

This means that the axial flux machine has a topology comprising one stator and two rotor disks. The two rotor disks are mounted on both sides of the stator disk, and a first respectively second air gap is present between the stator and the first respectively second rotor disk. The stator housing comprises a second cover facing the second air gap. A second set of one or more spraying elements is provided on the second cover, and a second set of one or more cooling channels running through the stator allow to supply a cooling fluid under pressure towards the spraying elements of the second set. The spraying elements and cooling channels of the second set are defined in a similar way as above, with respect to the spraying elements on the first cover. Moreover, various embodiments are possible for the spraying elements and cooling channels of the second set, similar to the embodiments defined above. Providing spraying elements in both stator covers allows to obtain an improved rotor magnet cooling, for both of the rotor disks. In an embodiment, one spraying element is provided per stator cover, at opposing axial positions.

Optionally, any of the one or more cooling channels of the second set comprises a final portion provided as a channel through the material of the second cover and ending in the spraying element of the second set. The final portion is in fluid communication with the radial portion adapted to guide cooling fluid from the outer towards the inner circumference of the stator. Thus, any of the cooling channels of the second set, adapted to supply cooling fluid to a spraying element in the second cover plate, comprises a final portion. The final portion is provided as a channel through the material of the second cover, and is the equivalent of the 'end portion' provided in the first cover. Thus, a cooling channel of the first set, adapted to supply cooling fluid to a spraying element in the first cover, and a cooling channel of the second set, adapted to supply cooling fluid to a spraying element in the second cover, each have their own end portion respectively final portion. On the other hand, the radial portion, adapted to guide cooling fluid from the outer towards the inner circumference of the stator, is used in common by both the first and second stator cover. In other words, the second cooling channel, for cooling the second rotor disk, branches off from the radial portion of the first cooling channel, the latter for cooling of the first rotor disk. In this way, only one channel or passage for transport from outer to inner circumference needs to be provided for cooling both rotor disks, thereby reducing the complexity of the machine design and manufacturing cost. In an embodiment, the final portion of the second cooling channel may branch off from a fluid passage defined inside the stator housing. In another embodiment, the final portion of the second cooling channel may be connected to the radial portion, over an intermediate portion.

Optionally,
- the stator comprises at least one wall, the wall being positioned between two adjacent stator elements and axially extending between the first and second cover;
- the radial portion is provided as a channel running through the material of the first cover, or running through the material of the wall, and
- any of the one or more cooling channels of the second set comprises an intermediate portion provided as a channel running through the material of the wall, the intermediate portion being in fluid communication with both the radial portion and the final portion.

The wall makes part of the internal structure of the stator housing. In an embodiment, the stator housing may comprise multiple walls, each wall being positioned between adjacent stator elements. Typically, such walls extend in radial direction, e.g. for guiding a stator cooling fluid between the coils. The wall extends in axial direction, and typically connects both cover plates. The radial portion is provided as a channel running through the material of the first cover, or running through the material of the wall. Each of the one or more cooling channels of the second set comprises an intermediate portion, running through the wall, e.g. in axial direction, and a final portion, running through the second cover. The intermediate portion is in fluid communication with both the radial portion and the final portion. This implies that the intermediate portion may receive fluid from the radial portion, and supply fluid towards the final portion. In an embodiment, the intermediate portion directly connects the radial portion to the final portion. In this way, also for cooling of the magnets of the second rotor disk, the cooling fluid is only guided through channels provided in stator housing material, thereby avoiding heating of the fluid before being used for rotor cooling.

### Brief Description of the Drawings

Fig. 1 illustrates a stator and two rotor disks, according to an embodiment of the invention.
Fig. 2 illustrates a stator, of which the second cover is removed, according to an embodiment of the invention.
Fig. 3 gives a top view of the opened stator of Fig. 2.
Fig. 4 gives a detailed view of Fig. 3.
Fig. 5 illustrates a rotor disk, according to an embodiment of the invention.
Fig. 6 and Fig. 8 give a top view of the stator, according to an embodiment of the invention.
Fig. 7 gives a cross section, according to a curved plane parallel to the axial direction, of the stator, according to an embodiment of the invention.
Fig. 9 gives a transverse cross section, according to section CC, illustrating a cooling channel for rotor magnet cooling according to a first embodiment of the invention.
Fig. 10 gives a cross section, according to section AA, illustrating cooling channels for rotor magnet cooling according to a first embodiment of the invention.
Fig. 11 and Fig. 12 give a radial cross section, illustrating cooling channels for rotor magnet cooling according to a first embodiment of the invention.
Fig. 13 gives a cross section, according to section AA, illustrating cooling channels for rotor magnet cooling according to a second embodiment of the invention.
Fig. 14 gives a cross section, according to section AA, illustrating cooling channels for rotor magnet cooling according to a third embodiment of the invention.
Fig. 15 gives a cross section, according to section AA, illustrating cooling channels for rotor magnet cooling according to a fourth embodiment of the invention.

### Detailed Description of Embodiment(s)

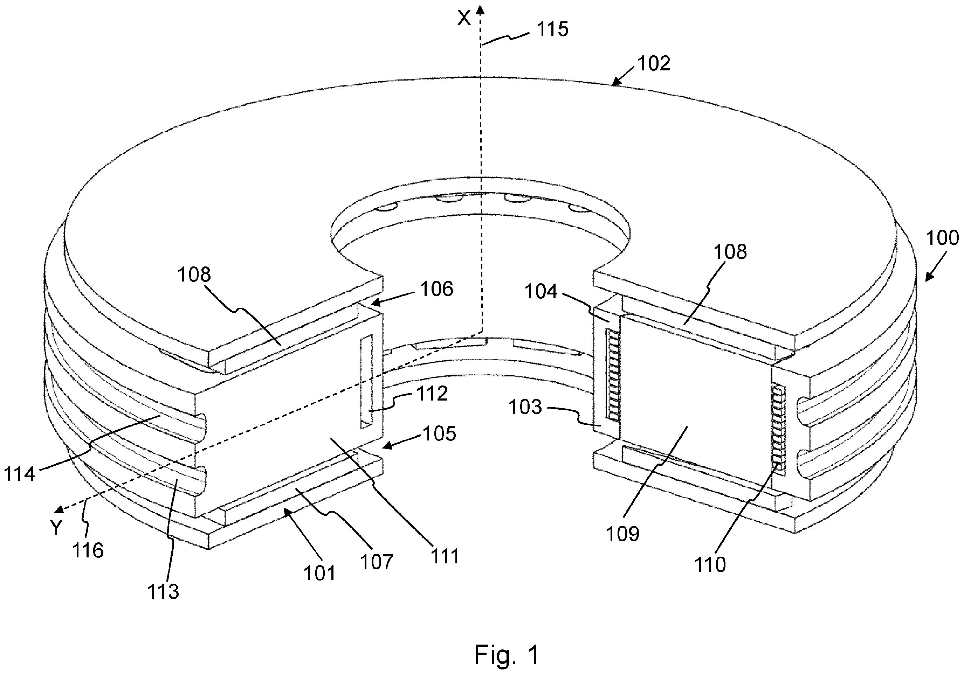

Fig. 1 illustrates a stator 100 and rotor of an axial flux machine. Two rotor disks 101, 102 are positioned on both sides of the stator disk 100. The stator disk 100 and the first rotor disk 101 are axially spaced apart by a first air gap 105, while the stator disk 100 and the second rotor disk 102 are axially spaced apart by a second air gap 106. The stator disk 100 and rotor disks 101, 102 have a central axis in X-direction or axial direction 115, corresponding to the rotational axis of the machine. The radial direction 116 is indicated as Y-direction in the figure. The first rotor disk 101 comprises magnetic material 107, also referred to as magnets 107 or rotor magnets 107, and typically being permanent magnets. The second rotor disk 102 comprises magnetic material 108, also referred to as magnets 108 or rotor magnets 108, and typically being permanent magnets. The magnets 107, 108 generate a magnetic flux in axial direction 115.

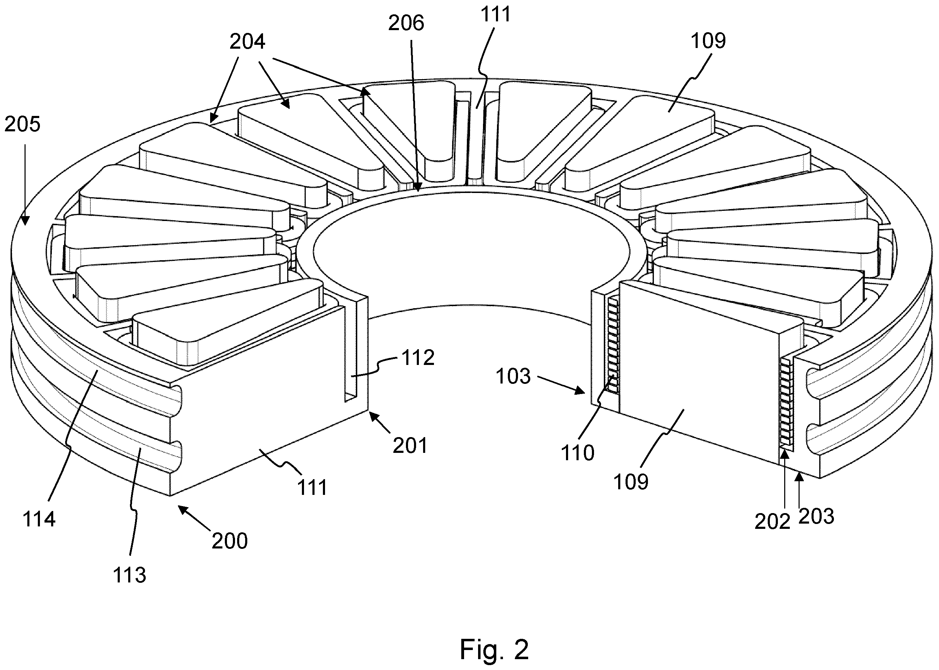

The stator housing or clamshell comprises a first cover 103 and a second cover 104. The cover plates 103, 104 are perpendicular to the axial direction 115 and form the bottom respectively upper limitation of the stator housing. Fig. 2 shows the stator 100, of which the second cover 104 has been removed. The stator 100 comprises a plurality of stator elements 204 being arranged rotationally symmetrical with respect to the central axis 115. Every stator element 204 comprises a coil or winding 110, wound around a ferromagnetic core 109, the cores 109 extending in axial direction 115. The first cover plate 103 has an internal side 202 and an external side 203. The internal side 202 is directed towards the interior of the stator housing and thus faces the coils 110. The external side 203 is directed towards the exterior of the stator housing and thus faces the first air gap 105. The first cover 103 is disk-shaped, having a circular outer circumference 200 and a circular inner circumference 201. The first cover plate 103 and second cover plate 104 are connected via circumferential walls 205, 205, positioned at the outer respectively inner circumference.

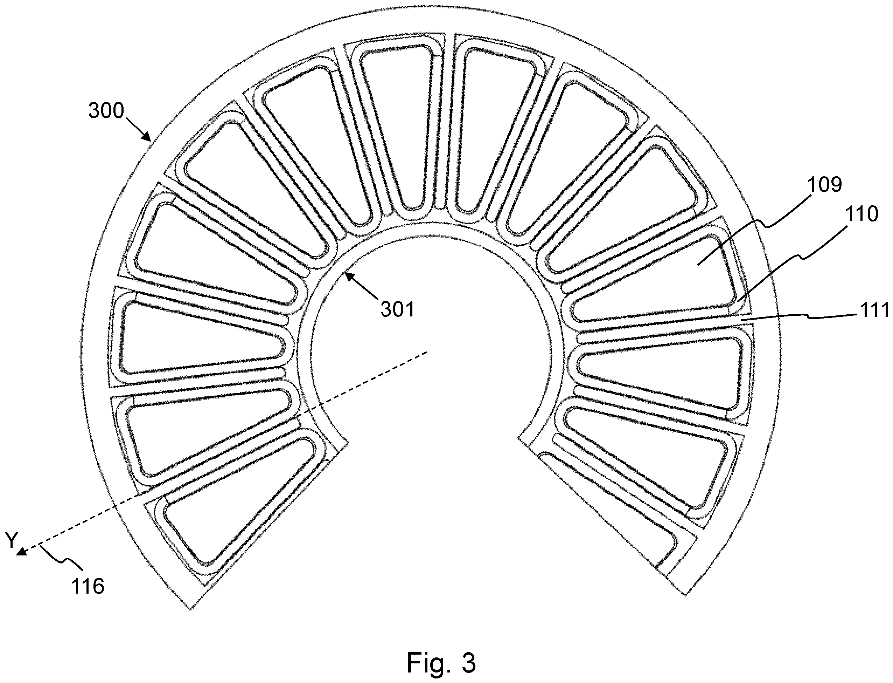

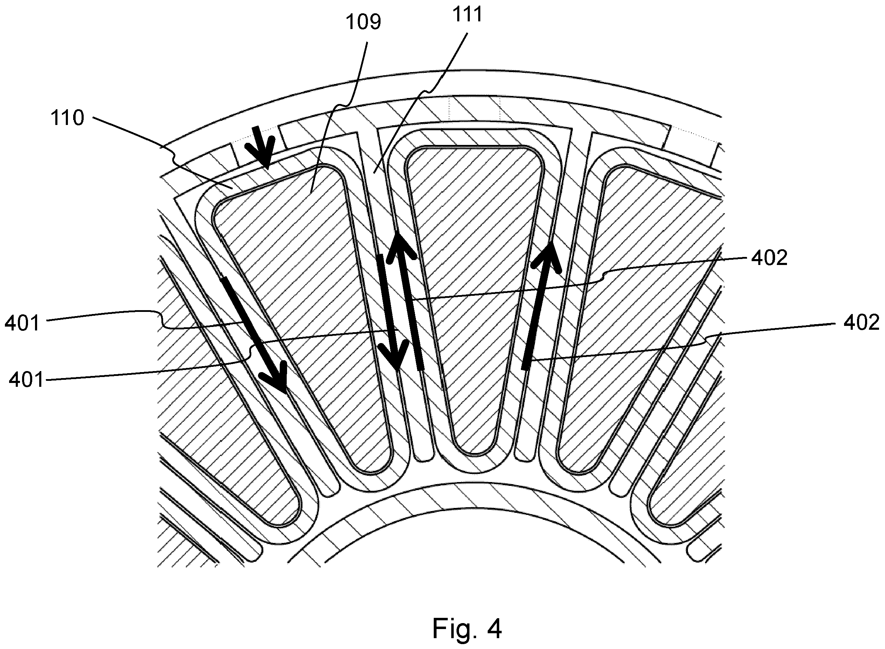

Fig. 3 and Fig. 4 give a top view of the opened stator 100 of Fig. 2. The stator disk 100 has an outer circumference 300 and an inner circumference 301. The inner structure of the stator housing comprises guiding walls 111, wherein a guiding wall 111 is positioned between each pair of adjacent stator elements 204, and extends in radial direction 116. The radial walls 111 are connected at one outer end to the outer circumferential wall 205. In axial direction, the radial walls extend between the first cover 103 and second cover 104, thereby connecting both cover plates.

As can be seen from Fig. 1 and 2, the outer circumferential wall 205 comprises outer channels 113 and 114, while the space between the guiding wall outer ends and the inner circumferential wall 206 defines an inner channel 112. The channels 113, 114 and 112 make part of a cooling circuit for stator cooling, intended for cooling the stator elements 204. Such a stator cooling solution is known in the prior art, and is e.g. described in EP3764526A1. The outer and inner channels 113, 114, 112 are arranged to let a stator cooling fluid flow tangentially about the central axis. On the other hand, the guiding walls 111 are arranged to let the stator cooling fluid flow in radial direction. For this purpose, radial fluid passages are available between every coil 110 and an adjacent radial wall 111. In the shown embodiment, cooling fluid is supplied to the cold channel 113 via a supply port, the latter not being shown on the figures. Fig. 4 schematically illustrates the stator fluid circulation, indicated by arrows. In the channel 113, the cooling fluid circulates in tangential direction. Next, the cooling fluid flows in radial direction, towards the inner circumference, see arrows 401. While flowing via the radial fluid passages, the fluid is guided by the radial walls 111, thereby being forced to flow against the coils 110 and evacuating heat from the coils 110. The fluid is then collected in the inner channel 112. For an adjacent stator element, the radial flow occurs in the opposite direction, from inner to outer circumference, see arrows 402. The heated fluid is collected in the hot channel 114, the latter being connected to a port for draining the stator cooling fluid.

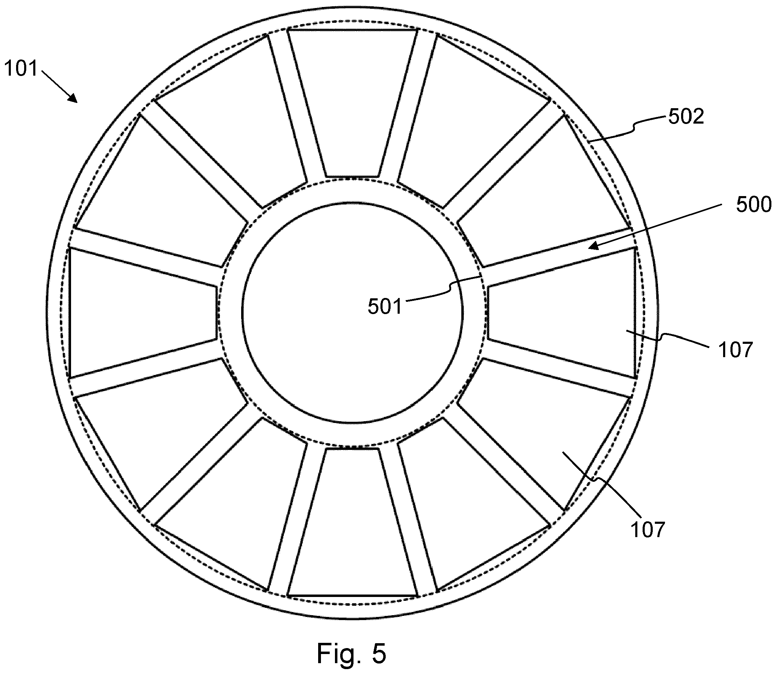

Fig. 5 gives a top view of the first rotor disk 101. It comprises magnets 107 attached to a disk-shaped plate. The magnets 107 are arranged rotationally symmetrical about the central axis. As is visible on the figure, the magnets 107 together define an annular or ring-shaped zone 500 on the rotor disk. Any of the magnets 107 is positioned within the annular zone 500. The zone 500 is delimited by an inner limit 501 and an outer limit 502. When mounted in the axial flux machine, the top surfaces of the magnets 107 face the first air gap 105, the top surfaces thus being in contact with the air gap 105. The second rotor disk 102 has a design similar to the first rotor disk 101.

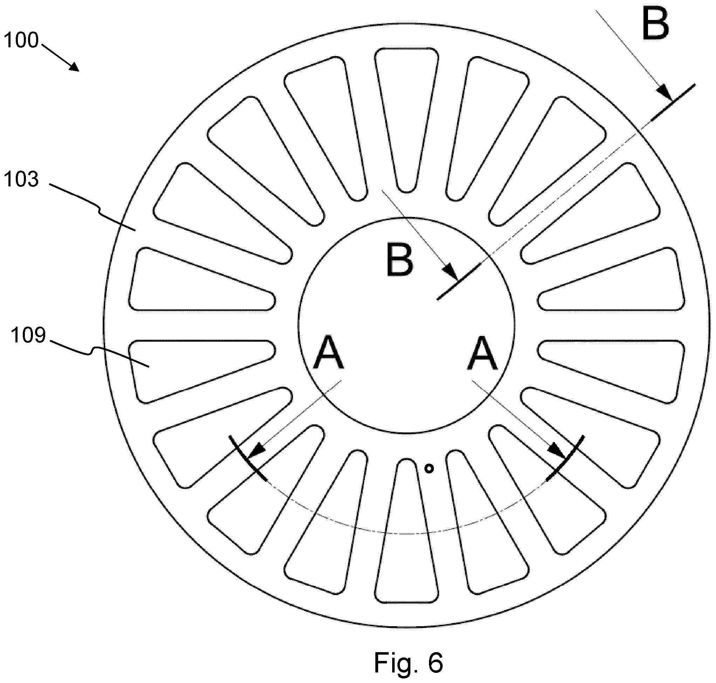

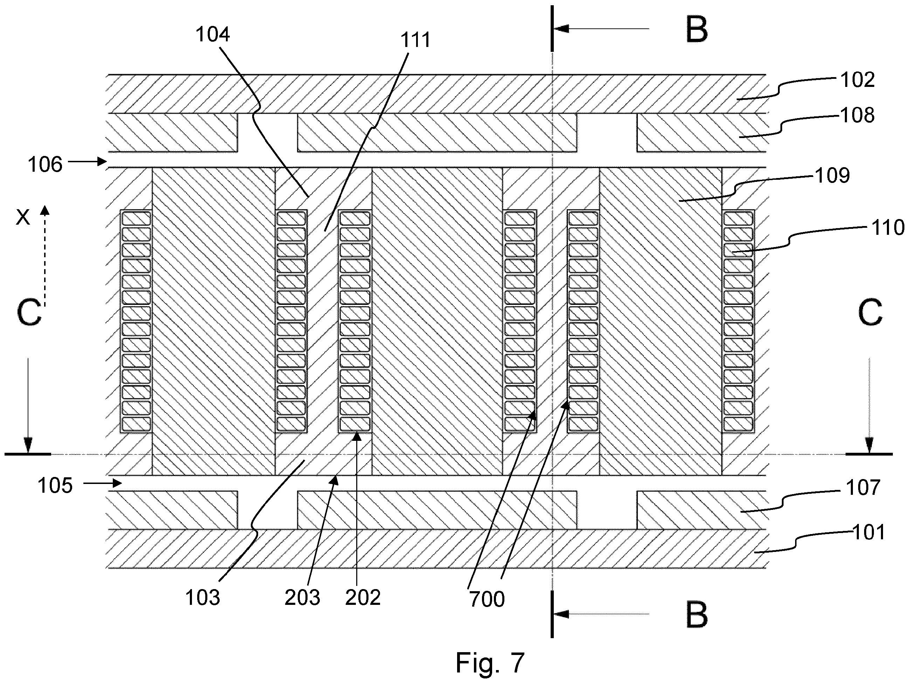

Fig. 6 gives a top view of the first stator cover 103, or of the second stator cover 104 which looks similar. The figure shows that the stator cover plate 103, 104 comprises holes, through which the cores 109 extend. This is also visible from Fig. 7, showing three adjacent stator elements 204, having cores 109 of which the outer ends extend through both cover plates 103 and 104. The top surfaces of the cores 109 are thus in contact with the respective air gaps 105 and 106. Remark that the cross section of Fig. 7 is taken according to a curved plane, similar to section AA indicated in Fig. 6, but at another angular position than section AA. Therefore, no cooling channels for rotor cooling are visible on Fig. 7. The cooling channels for rotor cooling will be further discussed underneath. Finally, Fig. 7 again shows the presence of a guiding wall 111 between every pair of adjacent coils 110. The cooling fluid for stator cooling flows in radial direction, via radial fluid passages 700 defined by the coils 110 and guiding walls 111.

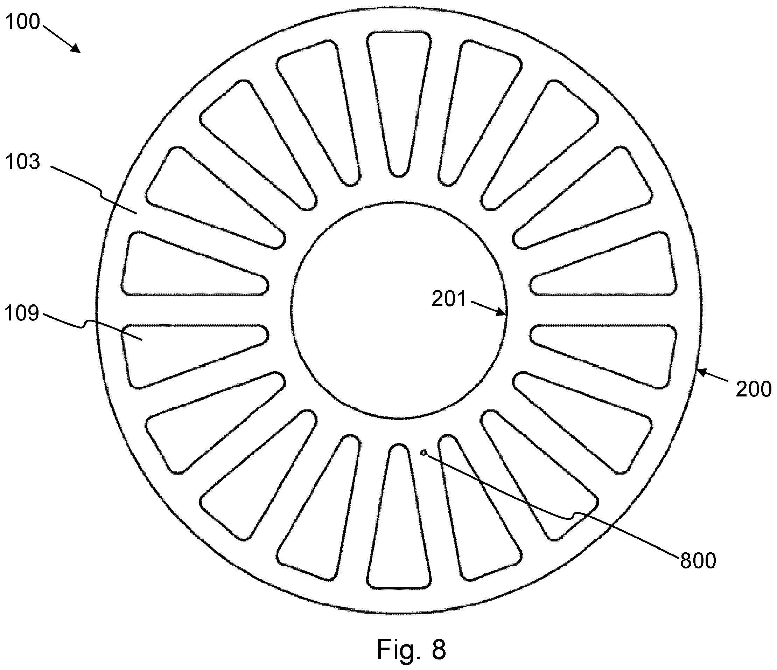

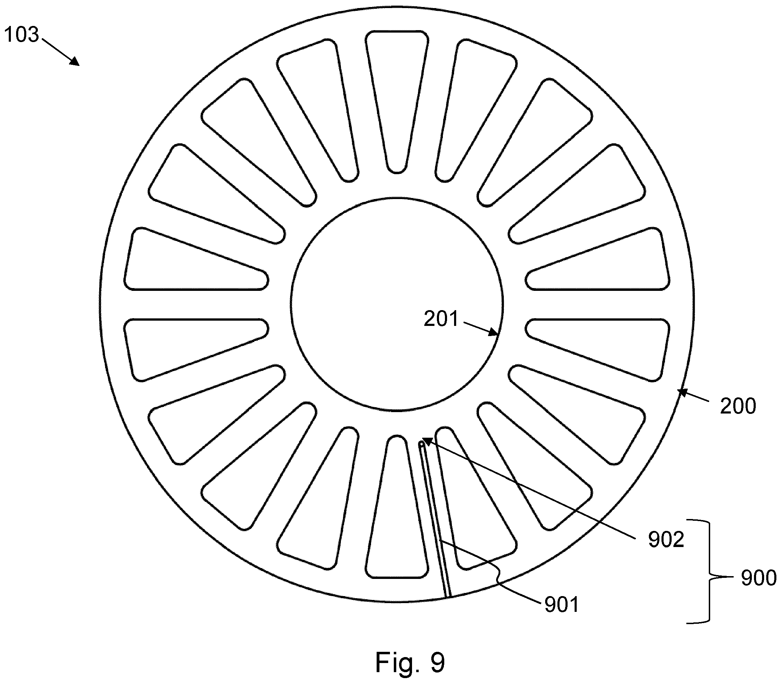

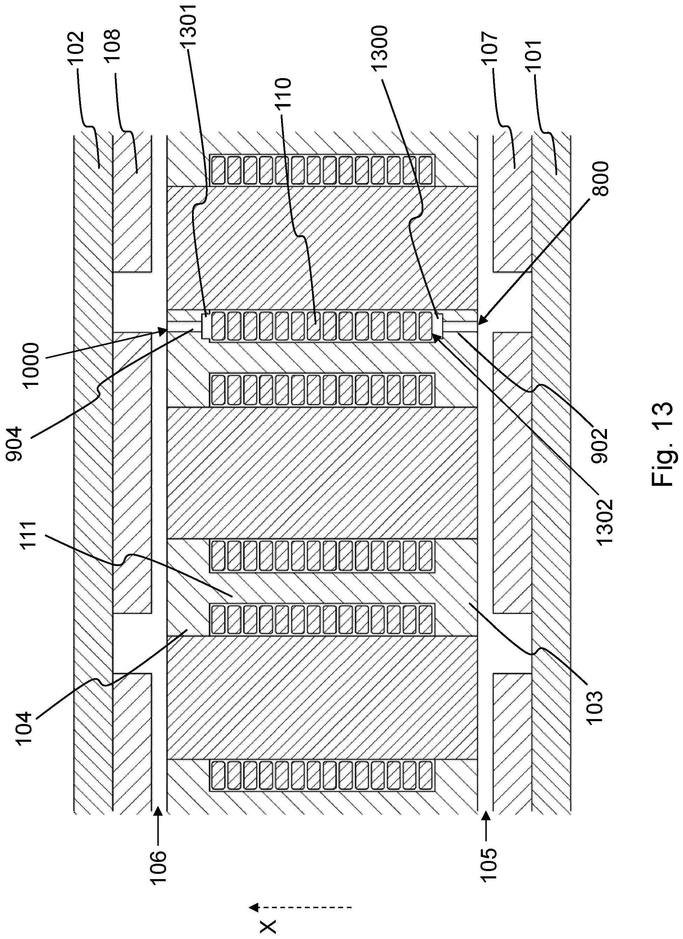

Fig. 8 to 15 illustrate the invented solution for improved cooling of the rotor magnets. Four different embodiments of the rotor cooling channels are described. Fig. 9 to 12 illustrate the first embodiment. Fig. 13, 14 and 15 illustrate the second, third and fourth embodiment respectively. Fig. 8, giving a top view of the first stator cover 103, is applicable for any of the four embodiments.

As shown in Fig. 8, the first stator cover plate comprises a spraying element 800. In the shown embodiments, only one spraying element 800 is provided in the first cover 103. In other embodiments, more than one spraying element 800 may be present. The second cover plate 104 also comprises a spraying element, opposing the spraying element 800 of the first cover plate 104. In the shown embodiments, the spraying element is provided as a single exit hole, facing the first air gap 105. Via the spraying element 800, a fluid under pressure may be ejected into the first air gap 105, thereby creating a jet pointing at the annular magnet zone 500. As is visible from Fig. 8, the spraying element 800 is located at a radial position close to the inner circumference 201.

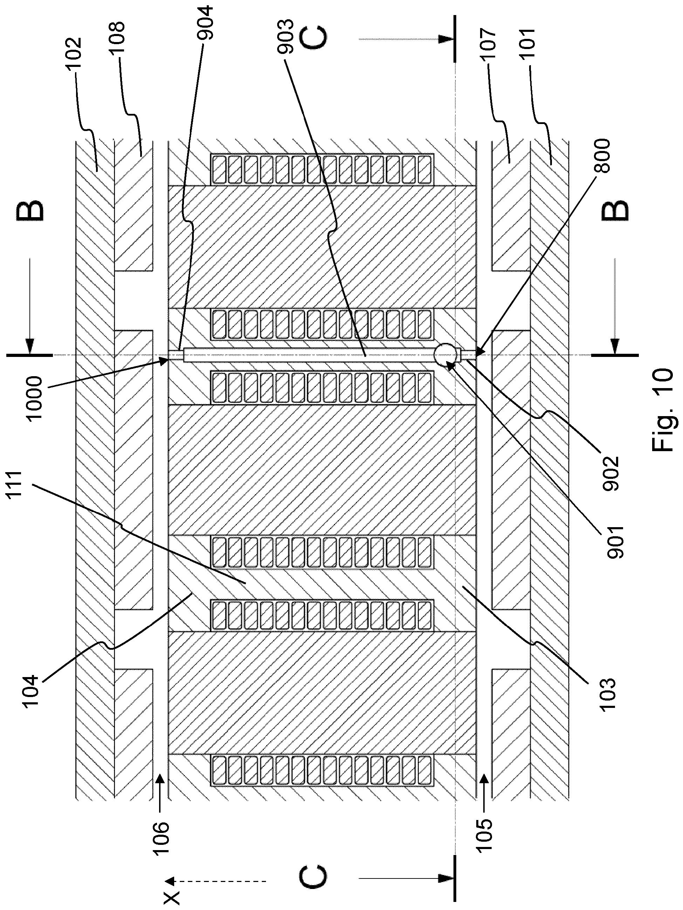

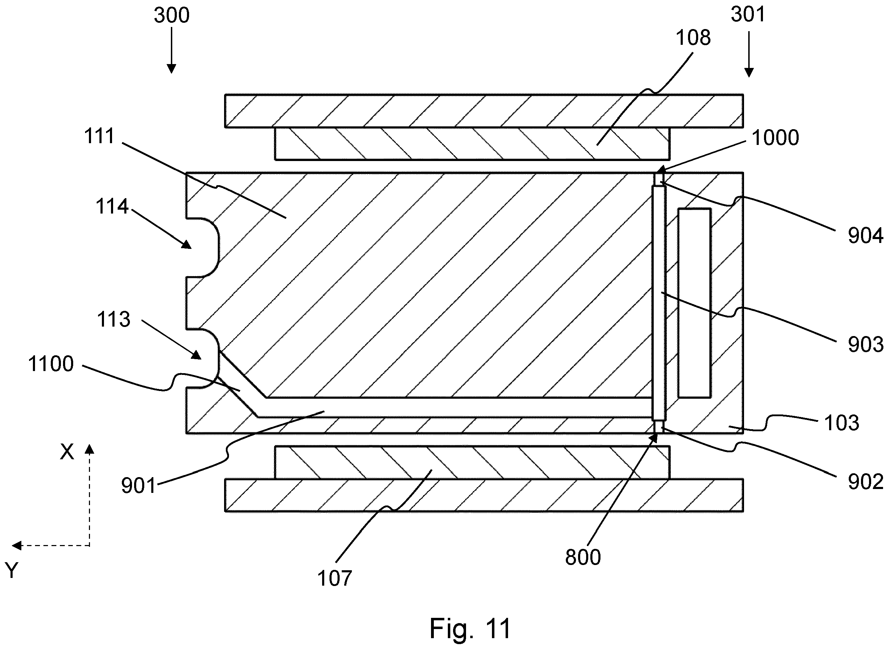

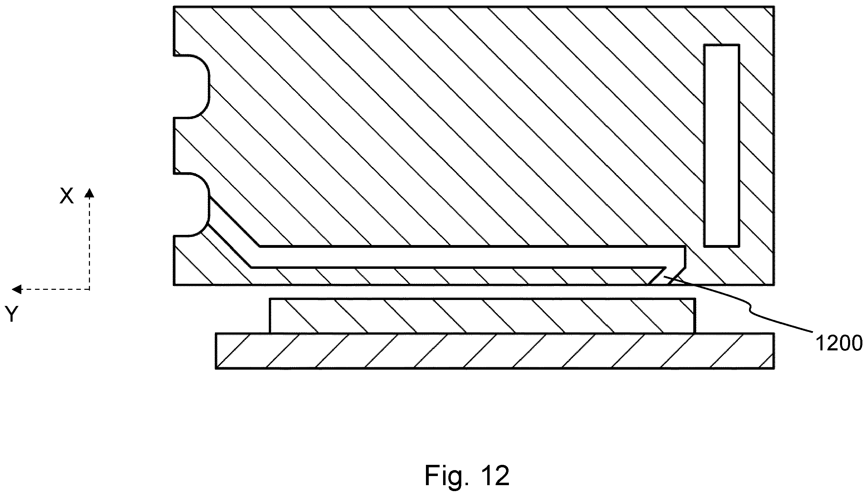

The stator further comprises a cooling channel, for guiding a cooling fluid under pressure to the spraying element 800. In the first embodiment, illustrated in Fig. 9 to 12, the cooling channel 900 is a channel running through stator housing material, e.g. a bored channel. Fig. 9 shows a cross section according to section CC, see Fig. 7 for an indication of cut CC. Fig. 10 shows a cross section according to section AA, see Fig. 6 for an indication of cut AA. Fig. 11 and Fig. 12 show a cross section according to the radial direction, similar to cut BB of Fig. 6, but at an angular position corresponding to the spraying element 800.

The cooling channel 900 comprises a radial portion 901 and an end portion 902. Both the radial portion 901 and the end portion are provided as channels through stator housing material. The radial portion 901 is a channel running through the first cover 103, from the outer circumference 200, 300 towards the inner circumference 201, 301. In another embodiment, the radial portion 901 may run through a guiding wall 111 instead of the first cover 103. In the shown embodiment, the radial portion 901 runs in radial direction. The end portion 902 is a channel running through the first cover 103, connecting the radial portion 901 to the spraying element 800.

As being visible from Fig. 11, the radial portion 901 is in fluid communication with the cold channel 113, via channel portion 1100. As explained above, the cold channel 113 makes part of the cooling circuit for stator cooling. Thus, the cooling channel 900, provided for rotor magnet cooling, branches off from the circuit for cooling the stator elements 204. In this way, cold cooling fluid, not yet heated by the stator elements, is used for cooling the rotor magnets.

During operation of the machine, the cooling fluid is first transferred via the radial portion 901, thereby flowing in radial direction, from the outer circumference 300 towards the inner circumference 301. Such a transport from the outer towards inner circumference is required because the cold channel 113 is located at the outer circumference 300 while the spraying element 800 is located close to the inner circumference 301. Next, the cooling fluid flows via the end portion 902 to the exit hole 800, from where it is ejected.

In this way, a jet is created, pointing to the annular magnet zone 500. Thus, after being ejected, the cooling fluid crosses the first air gap 105, and at least part of the ejected fluid reaches the rotor zone 500 in which the magnets 107 are located. During operation of the machine, when the rotor disk rotates, every magnet 107 successively passes the cooling fluid jet, thereby being splashed by the ejected cooling fluid. In this way, during operation with rotating rotor, the magnets 107 are cooled by cooling fluid sprayed directly on the respective magnet surfaces. Due to the centrifugal force, the cooling fluid is scattered, thereby further contributing to the cooling of the magnet surfaces. Afterwards, the cooling oil is radially expelled from the air gap to the outside, and may be collected in a sump for extraction. Remark that the cooling oil, besides serving for cooling purposes, may at the same time contribute to lubrication of the bearings.

Similarly, the magnets 108, provided on the second rotor disk 102, are cooled by means of a jet ejected from a spraying element 1000 in the second stator cover 104. For this purpose, the stator comprises a second cooling channel, adapted to guide cooling fluid towards the spraying element 1000 of the second cover 104. In the shown embodiment, the second cooling channel comprises an intermediate portion 903 and a final portion 904. The intermediate portion 903 is a channel running in axial direction, through a guiding wall 111. A first outer end of the intermediate portion 903 is connected to the final portion 904, the latter running through the second cover 104 and ending in the spraying element 1000. The other outer end of the intermediate portion 903 is connected to the radial portion 901. Thus, the radial portion 901 is used in common for cooling of the first and second rotor disk. During operation, the cooling fluid first flows from the outer towards the inner circumference, via the radial portion 901. Next, part of the fluid enters the end portion 902, towards the first spraying element 800, and another part enters the intermediate portion 903, towards the second spraying element 1000.

The end portion 902 of the cooling channel may be straight, like in Fig. 11, or may be angled, like the end portion 1200 illustrated in Fig. 12. For illustration purposes, only the first rotor disk 101 and corresponding cooling channel is shown in Fig. 12. Using an exit hole 800, 1000 as spraying element, allows the cooling fluid to be provided at a relatively low pressure, e.g. between 1 and 2 bar. Typically, the radial portion 901 of the cooling channel is made relatively wide, to allow for an unhindered flow and sufficient flow rate in radial direction. On the other hand, the end portions 902, 904 and exit holes 800, 1000 must be specifically designed to obtain the desired jet shape and preferred flow speed and flow rate of the ejected spray. For this purpose, exit holes 800, 1000 with relatively small diameter may be used. Remark that obtaining the right amount of fluid being ejected towards the rotor magnets is important: on the one hand sufficient heat needs to be extracted from the magnets, on the other hand the air gap may not get soaked with cooling fluid. The latter would cause undesired friction during rotation. For example, a flow rate of 1 litre per minute may be provided for rotor cooling, of which 0,5 litre per minute is ejected towards the first rotor disk 101 and 0,5 litre per minute is ejected towards the second rotor disk 102. For example, 10% to 30% of the main cooling fluid may be tapped for the purpose of rotor cooling.

Finally, when cooling fluid is ejected via the spraying elements 800 and 1000, and reaches the rotor magnets 107 and 108 respectively, at least part of it is splashed back onto the top surfaces of the cores 109. Thus, by providing cores 109 extending through holes in the stator covers 103, 104, also an improved cooling of the stator elements is obtained.

Fig. 13, Fig. 14, and Fig. 15 illustrate respectively a second, third and fourth embodiment. These embodiments differ from the first embodiment, in the way the radial fluid transfer, from outer towards inner circumference, is done, before the fluid enters the end portion 902. The end portion 902, provided as a channel through the first cover 103, and spraying element 800, are similar as in the first embodiment of Fig. 9 to 12. Also the final portion 904 and corresponding spraying element 100 are similar as in the first embodiment.

Fig. 13 illustrates the second embodiment. In the shown embodiment, a recess or groove 1300 is applied at the internal side 202 of the first cover plate 103, thereby creating some space between the upper side 1302 of the coil 110 and the cover plate 103. The provided space serves as a bypass channel 1300 under the winding; part of the fluid flowing in radial direction, for the purpose of stator cooling, will not flow along the side face of the coil, but will flow in radial direction via the bypass channel 1300. Thus, the cooling fluid is guided between the upper side 1302 of the coil 110 and the internal side 202 of the first cover 103 when flowing from the outer 300 towards the inner circumference 301 of the stator. In other words, in this embodiment, the radial portion is a fluid passage 1300 defined by the internal side 202 of the first cover 103 and the upper side of a coil 110.

The end portion 902 branches off from the fluid passage 1300, such that part of the fluid in the bypass channel 1300 flows to the spraying element 800, for cooling of the rotor magnets 107. During the transport in radial direction, the cooling fluid is contact with the upper side of the winding. Consequently, the cooling fluid is heated to some extent, before being ejected via the spraying element 800. Similar to the cooling of the first rotor disk 101, a bypass channel or fluid passage 1301 is provided for cooling of the second rotor disk 102. The final portion 904, which ends in the spraying element 1000, branches of from the fluid passage 1301.

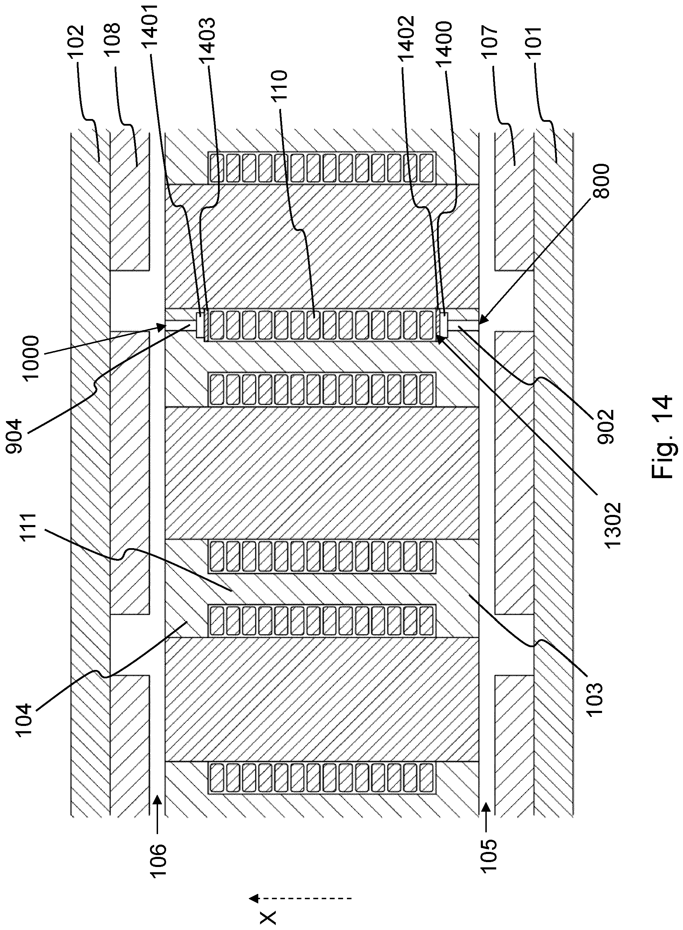

Fig. 14 illustrates the third embodiment. The third embodiment only differs form the second embodiment in that a plate 1402 separates the bypass channel 1400 from the coil 110. The plate 1402 is perpendicular to the axial direction, and substantially parallel to the upper side 1302 of the coil 110. Similar to the second embodiment, a recess or groove 1400 is applied at the internal side 202 of the first cover plate 103. The plate 1402 is positioned between the internal side 202 of the first cover 103 and the upper side 1302 of the coil 110. The bypass channel 1400 or fluid passage 1400 is thus defined by the plate 1402 and the internal side 202 of the first cover 103. During operation, the cooling fluid is guided between the plate 1402 and the internal side 202 of the first cover 103 when flowing in radial direction. In other words, in this embodiment the radial portion is a fluid passage 1400 defined by the internal side 202 of the first cover 103 and the plate 1402.

The end portion 902 branches off from the fluid passage 1400, such that part of the fluid in the bypass channel 1400 flows to the spraying element 800, for cooling of the rotor magnets 107. The plate 1402 shields the cooling fluid from the hot winding, thereby limiting heating of the rotor cooling fluid before being ejected via the spraying element 800. Similar to the cooling of the first rotor disk 101, a bypass channel or fluid passage 1401 is provided for cooling of the second rotor disk 102. The final portion 904, which ends in the spraying element 1000, branches of from the fluid passage 1401.

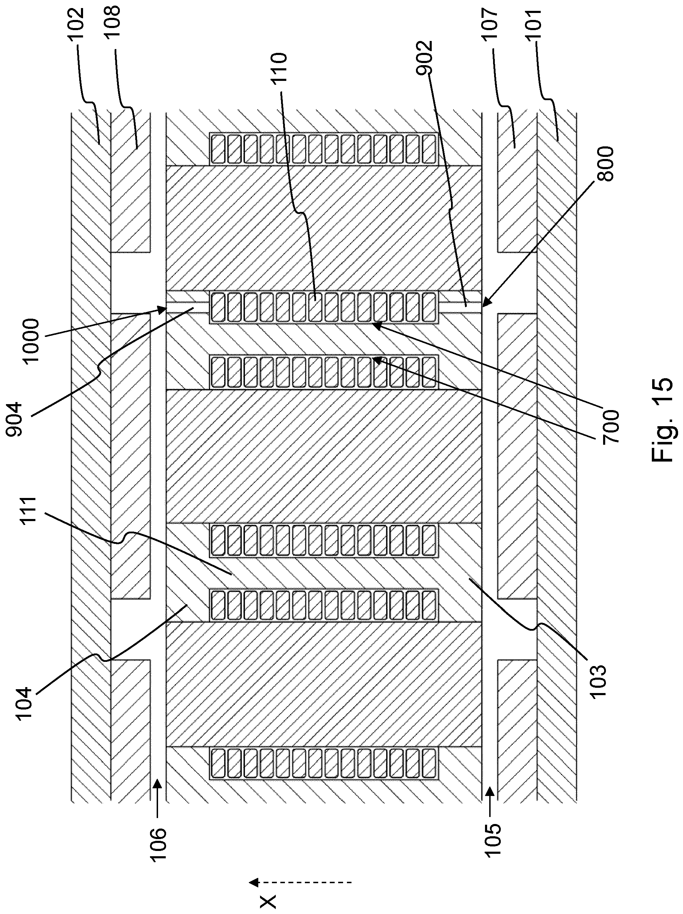

Fig. 15 illustrates the fourth embodiment. In this embodiment, no particular radial cooling channel is provided for the purpose of rotor cooling. Instead, use is made of the already available radial fluid passages 700, being used for cooling of the stator elements 204. As was already explained with respect to Fig. 7, the cooling fluid for stator cooling flows in radial direction, via radial fluid passages 700 defined by the coils 110 and guiding walls 111. As shown in Fig. 15, in the fourth embodiment, the end portion 902 and final portion 904 branch off from one of those radial fluid passages 700. Thus, in this embodiment the radial portion of the cooling channel for rotor cooling corresponds to one of the fluid passages 700 between adjacent stator elements 204, the fluid passages 700 being used for cooling of the stator elements 204. Due to the contact with at least one coil 110, the cooling fluid will heat up to some extent, before being ejected by the spraying elements 800 and 1000.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. An axial flux machine, comprising a stator (100) and a rotor having a central axis in axial direction (115) corresponding to the rotational axis of the axial flux machine, and the rotor comprising a first rotor disk (101) being axially separated from the stator (100) by an air gap (105), wherein
- the stator (100) comprises a plurality of stator elements (204) enclosed by a stator housing, any of the stator elements (204) comprising a coil (110) wound around a core (109);
- the first rotor disk (101) comprises magnets (107), of which the magnet surfaces are located in an annular zone (500) on the rotor disk side facing the air gap (105),
and wherein the stator (100) comprises:
- one or more spraying elements (800), each of the spraying elements (800) comprising at least one exit hole, and
- one or more cooling channels (900) adapted to guide a cooling fluid under pressure to the one or more respective spraying elements (800), any of the one or more cooling channels (900) comprising a radial portion (901) adapted to guide cooling fluid from the outer (300) towards the inner circumference (301) of the stator, and an end portion (902) ending in the spraying element (800), the end portion (902) being in fluid communication with the radial portion (901),
**CHARACTERIZED IN THAT**:
- the stator housing comprises a first cover (103), the first cover (103) having an internal side (202) facing the upper side (1302) of the coils (110) and an external side (203) facing the air gap (105), wherein the one or more spraying elements (800) are provided on the first cover (103);
- the end portion (902) is provided as a channel through the material of the first cover (103), and
- the radial portion
∘ is provided as a channel (901) running through the material of the first cover (103), or running through the material of a wall (111), the wall (111) positioned between adjacent stator elements (204),
or
∘ is a fluid passage (1300, 1400) defined by space available between the internal side (202) of the first cover (103) and the upper side (1302) of a coil (110), or between the internal side (202) of the first cover (103) and a plate (1402), the plate (1402) positioned between the internal side (202) of the first cover (103) and the upper side (1302) of a coil (110), such that during operation, while the cooling fluid is flowing from the outer (300) towards the inner circumference (301) of the stator, the cooling fluid is guided between the internal side (202) of the first cover (103) and respectively the upper side (1302) of the coil (110) or the plate (1402), and wherein the end portion (902) branches off from the fluid passage (1300, 1400),
wherein any of the spraying elements (800) is adapted to eject cooling fluid towards the annular magnet zone (500), such that during operation with rotating rotor, the magnets (107) are cooled by cooling fluid sprayed directly on the respective magnet surfaces.

2. Axial flux machine according to claim 1,
wherein the stator housing comprises walls (111) adapted for guiding a stator cooling fluid, each of the walls (111) positioned between adjacent stator elements (204), and extending in radial (116) and axial direction (115).

3. Axial flux machine according to claim 2,
wherein each of the walls (111) is connected to the first cover (103).

4. Axial flux machine according to claim 2 or 3,
wherein the stator housing comprises a circumferential wall (205) positioned at the outer circumference, and a circumferential wall (206) positioned at the inner circumference, and wherein each of the walls (111) is connected at one outer end to the outer circumferential wall (205).

5. Axial flux machine according to any of the preceding claims,
wherein the one or more spraying elements (800) are provided as one or more respective holes in the first cover (103), thereby being adapted to eject the cooling fluid as a jet pointing at the magnet zone (500).

6. Axial flux machine according to any of the preceding claims
wherein a single spraying element (800) is provided on the first cover (103).

7. Axial flux machine according to any of the preceding claims,
wherein the one or more cooling channels (900) branch off from a cooling circuit for cooling the stator elements (204).

8. Axial flux machine according to any of the preceding claims,
wherein the cooling fluid is a cooling liquid, for example oil.

9. Axial flux machine according to any of the preceding claims,
wherein the first cover (103) has an outer circumference (200) and an inner circumference (201), and any of the one or more spraying elements (800) is located at a radial position closer to the inner circumference (201) than to the outer circumference (200).

10. Axial flux machine according to any of the preceding claims,
wherein any of the one or more cooling channels (900) is in fluid communication with a fluid inlet located at the outer circumference (300) of the stator (100), such that, during operation, cooling fluid is guided from the outer (300) towards the inner circumference (301) of the stator, before being ejected via the one or more spraying elements (800).

11. Axial flux machine according to any of the preceding claims,
wherein the cores (109) of the stator elements (204) extend through the first cover (103), such that surfaces of the respective cores (109) are in contact with the air gap (105),
and wherein, during operation of the machine, at least part of the cooling fluid ejected by the one or more spraying elements (800) splashes against the core surfaces, thereby cooling the cores (109).

12. Axial flux machine according to any of the preceding claims,
wherein:
- the rotor comprises a second rotor disk (102) being axially separated from the stator (100) by a second air gap (106);
- the stator housing comprises a second cover (104) facing the second air gap (106);
- the second rotor disk (102) comprises magnets (108), of which the magnet surfaces are located in an annular zone (500) on the disk side facing the second air gap (106),
and wherein the stator (100) comprises:
- a second set of one or more spraying elements (1000) provided on the second cover (104), each of the spraying elements (1000) comprising at least one exit hole, and
- a second set of one or more cooling channels adapted to guide a cooling fluid under pressure to the one or more respective spraying elements (1000) of the second set,
wherein any of the spraying elements (1000) is adapted to eject cooling fluid towards the annular magnet zone of the second rotor disk (102), such that during operation with rotating rotor, the magnets (108) of the second rotor disk (102) are cooled by cooling fluid sprayed directly on the respective magnet surfaces.

13. Axial flux machine according to claim 12,
wherein any of the one or more cooling channels of the second set comprises a final portion (904) provided as a channel through the material of the second cover (104) and ending in the spraying element (1000) of the second set,
wherein the final portion (904) is in fluid communication with the radial portion (901) adapted to guide cooling fluid from the outer (300) towards the inner circumference (301) of the stator.

14. Axial flux machine according to according to claim 13,
wherein:
- the stator (100) comprises at least one wall (111), the wall (111) being positioned between two adjacent stator elements (204) and axially extending between the first (103) and second cover (104);
- the radial portion (901) is provided as a channel running through the material of the first cover (103), or running through the material of the wall (111), and
- any of the one or more cooling channels of the second set comprises an intermediate portion (903) provided as a channel running through the material of the wall (111), the intermediate portion (903) being in fluid communication with both the radial portion (901) and the final portion (904).
